# FASCICULE DE BREVET EUROPEEN

(11) **EP 0 986 767 B1**
(45) Date de publication et mention de la délivrance du brevet: **18.09.2002**
(21) Numéro de dépôt: 99910449.0
(22) Date de dépôt: 29.03.1999
(51) Int. Cl.: G02B 1/04, C08G 75/04

(54) **LENTILLE OPTIQUE EN MATERIAU ORGANIQUE POLYMERE TRANSPARENT DE HAUT INDICE DE REFRACTION ET HAUT NOMBRE D'ABBE**
OPTISCHE LINSE AUS TRANSPARENTEM ORGANISCHEM KUNSTSTOFFMATERIAL MIT HOHEM BRECHUNGSINDEX UND HOHER ABBEZAHL
OPTICAL LENS IN TRANSPARENT ORGANIC POLYMER MATERIAL WITH HIGH REFRACTIVE INDEX AND HIGH ABBE NUMBER

(30) Priorité: 03.04.1998 FR 9804189
(43) Date de publication de la demande: 22.03.2000
(73) Titulaire: ESSILOR INTERNATIONAL COMPAGNIE GENERALE D'OPTIQUE, 94227 Charenton cédex (FR)
(72) Inventeur: WIDAWSKI, Gilles, F-75011 Paris (FR)
(74) Mandataire: Catherine, Alain
(86) Numéro de dépôt international: FR9900725
(87) Numéro de publication internationale: WO99052000

(56) Documents cités:
- WO-A-88/02902
- WO-A-95/00557
- WO-A-95/00869
- FR-A- 2 068 711

## Description

La présente invention a pour objet des lentilles optiques, en particulier des lentilles ophtalmiques formées d'un matériau organique polymère transparent de haut indice de réfraction et haut nombre d'Abbe.

Par lentilles optiques à haut indice de réfraction, on entend les lentilles optiques dont l'indice de réfraction est supérieur ou égal à 1,55 et préférentiellement supérieur à 1,57.

De préférence, les lentilles optiques selon l'invention sont des verres de lunettes.

Les lentilles ophtalmiques à haut indice de réfraction doivent posséder l'ensemble des caractéristiques suivantes :
- une transparence élevée (transmission généralement supérieure à 85%, et de préférence supérieure ou égale à 90%, avec une absence ou éventuellement une très faible diffusion de la lumière,
- un nombre d'Abbe élevé, supérieur ou égal à 30, et de préférence supérieur ou égal à 35, afin d'éviter les aberrations chromatiques,
- un faible indice de jaune et une absence de jaunissement au cours du temps,
- une bonne résistance aux chocs (en particulier selon les normes CEN et FDA),
- une bonne aptitude aux traitements divers (dépôt de revêtement dur, antireflet, primaire antichoc, ...), et en particulier une bonne aptitude à la coloration,
- une valeur de température de transition vitreuse de préférence supérieure ou égale à 80°C, et mieux encore supérieure à 80°C, de préférence comprise entre 90 et 100°C.

En outre, les compositions polymérisables pour la fabrication des lentilles optiques doivent être également faciles à mettre en oeuvre sur le plan industriel.

En particulier, il est souhaitable que les compositions puissent être polymérisées rapidement, en particulier photopolymérisées afin de réduire les temps de cycle de fabrication des lentilles.

Le document FR-A-2.068.711 décrit des polymères utilisables pour la fabrication des lentilles optiques obtenues en faisant réagir un composé contenant un groupe bicyclique [2.2.1] avec un composé sulfuré. Tous les composés sulfurés envisagés sont des monothiols. L'indice de réfraction le plus élevé pour les polymères décrits est de 1,56.

On a trouvé, selon l'invention, qu'il était possible d'obtenir une lentille optique en matériau organique polymère transparent à haut indice de réfraction et haut nombre d'Abbe par copolymérisation d'un mélange de monomères comprenant au moins un monomère polythiol et au moins un monomère à haut nombre d'Abbe comprenant deux à quatre groupes terminaux cycliques pontés comportant une double liaison éthylénique intracyclique ou un reste aliphatique, linéaire ou ramifié, comportant une insaturation éthylénique, de préférence un groupe vinyle ou éthylidène directement lié à un carbone du cycle.

Les groupes terminaux cycliques pontés peuvent être des groupes cycliques non condensés ou condensés.

Les groupes terminaux cycliques pontés sont, de manière recommandée, choisis parmi les groupes de formules : 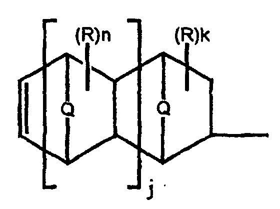 où n est un entier de 0 à 5 inclus, k est un entier de 0 à 3 inclus et j est un entier de 0 à 10 inclus, et 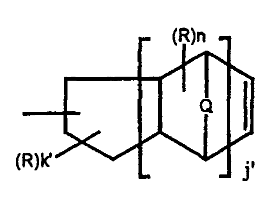 où n est un entier de 0 à 5, k' est un entier de 0 à 2 et j' est un entier de 0 à 10, Q représente un groupe -C(R')₂-, -O-, -S-, -NR'- ou -SO₂-, avec R' désignant H ou un radical alkyle en C₁-C₃, de préférence CH₃, et R est un atome d'hydrogène ou un radical alkyle en C₁-C₃, de préférence CH₃.

Parmi les groupes ci-dessus recommandés, on peut citer les groupes de formules : 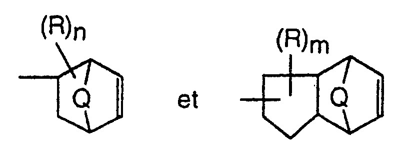 dans lesquelles Q représente -C(R'₂)-, -O-, -S-, -SO₂- ou -NR' -, R' représentant un atome d'hydrogène ou un radical alkyle en C₁-C₃, de préférence CH₃, R est un atome d'hydrogène ou un alkyle en C₁-C₃, de préférence CH₃, n=0 à 5 et m=0 à 8.

De préférence, Q représente le radical -CH₂-.

De préférence encore, on choisit un monomère à haut nombre d'Abbe dont l'indice de réfraction est d'au moins 1,56.

Les monomères polythiols convenant pour les lentilles selon la présente invention, sont bien connus dans la technique et peuvent être représentés par la formule R₁(SH)ₙ1, dans laquelle n¹ est un entier de 2 ou plus, de préférence de 2 à 5, et R₁ est un radical aliphatique, aromatique ou hétérocyclique.

De préférence, le composé polythiol est un composé dithiol, trithiol ou tétrathiol, en particulier un polythiol à nombre d'Abbe élevé.

Ces composés polythiols sont bien connus dans la technique et sont décrits entre autre dans le document EP 394 495.

Parmi les dithiols utiles dans la présente invention, on peut citer le 9,10-anthracènediméthanethiol, le 1,11-undécanedithiol, le 4-éthylbenzène-1,3-dithiol, le 1,2-éthanedithiol, le 1,8-octanedithiol, le 1,18-octadécanedithiol, le 2,5-dichlorobenzène-1,3-dithiol, le 1,3-(4-chlorophényl)propane-2,2-dithiol, le 1,1-cyclohexanedithiol, le 1,2-cyclohexanedithiol, le 1,4-cyclohexanedithiol, le 1,1-cycloheptanedithiol, le 1,1-cyclopentanedithiol, le 4,8-dithioundécane-1,11-dithiol, le dithiopentaérythritol, le dithiothréitol, le 1,3-diphénylpropane-2,2-dithiol, le 1,3-dihydroxy-2-propyl-2',3'-dimercaptopropyléther, le 2,3-dihydroxypropyl-2',3'-dimercaptopropyléther, le 2,6-diméthyloctane-2,6-dithiol, le 2,6-diméthyloctane-3,7-dithiol, le 2,4-diméthylbenzène-1,3-dithiol, le 4,5-diméthylbenzène-1,3-dithiol, le 3,3-diméthylbutane-2,2-dithiol, le 2,2-diméthylpropane-1,3-dithiol, le 1,3-di(4-méthoxyphényl)propane-2,2-dithiol, le 3,4-diméthoxybutane-1,2-dithiol, l'acide 10,11-dimercaptoundécanoïque, l'acide 6,8-dimercapto-octanoïque, le 2,5-dimercapto-1,3,4-thiadiazole, le 2,2'-dimercapto-biphényle, le 4,4'-dimercaptobiphényle, le 4,4'-dimercaptobibenzyle, le 3,4-dimercaptobutanol, le 3,4-dimercaptobutylacétate, le 2,3-dimercapto-1-propanol, le 1,2-dimercapto-1,3-butanediol, l'acide 2,3-dimercaptopropionique, le 1,2-dimercaptopropylméthyléther, le 2,3-dimercaptopropyl-2',3'-diméthoxypropyléther, le 3,4-thiophènedithiol, le 1,10-décanedithiol, le 1,12-dodécanedithiol, le 3,5,5-triméthylhexane-1,1-dithiol, le 2,5-toluènedithiol, le 3,4-toluènedithiol, le 1,4-naphtalènedithiol, le 1,5-naphtalènedithiol, le 2,6-naphtalènedithiol, le 1,9-nonanedithiol, le norbornène-2,3-dithiol, le bis(2-mercaptoisopropyl)éther, le bis(11-mercaptoundécyl)sulfure, le bis(2-mercaptoéthyl)éther, le bis(2-mercaptoéthyl)sulfure, le bis(18-mercaptooctadécyl)sulfure, le bis(8-mercaptooctyl)sulfure, le bis(12-mercaptodécyl)sulfure, le bis(9-mercaptononyl)sulfure, le bis(4-mercaptobutyl)sulfure, le bis(3-mercaptopropyl)éther, le bis(3-mercaptopropyl) sulfure, le bis(6-mercaptohexyl)sulfure, le bis(7-mercaptoheptyl) sulfure, le bis(5-mercaptopentyl)sulfure, l'acide 2,2'-bis(mercaptométhyl)acétique, le 1,1-bis(mercaptométhyl)cyclohexane, le bis (mercaptométhyl)durène, le phénylméthane-1,1-dithiol, le 1,2-butanedithiol, le 1,4-butanedithiol, le 2,3-butanedithiol, le 2,2-butanedithiol, le 1,2-propanedithiol, le 1,3-propanedithiol, le 2,2-propanedithiol, le 1,2-hexanedithiol, le 1,6-hexanedithiol, le 2,5-hexanedithiol, le 1,7-heptanedithiol, le 2,6-heptanedithiol, le 1,5-pentanedithiol, le 2,4-pentanedithiol, le 3,3-pentanedithiol, le 7,8-heptadécanedithiol, le 1,2-benzènedithiol, le 1,3-benzènedithiol, le 1,4-benzènedithiol, le 2-méthylcyclohexane-1,1-dithiol, le 2-méthylbutane-2,3-dithiol, l'éthylène glycol dithioglycolate, l'éthylène glycol bis(3-mercaptopropionate). Parmi les trithiols, on peut citer le 1,2,3-propanetrithiol, le 1,2,4-butanetrithiol, le triméthylolpropanetrithiol glycolate, le triméthylolpropane tris(3-mercaptopropionate), le pentaérythritol trithioglycolate, le pentaérythritol tris(3-mercaptopropionate), le 1,3,5-benzènetrithiol, et le 2,4,6-mésitylènetrithiol.

On peut encore citer parmi les polythiols utiles dans les compositions de la présente invention, le néopentane tétrathiol, le 2,2'-bis(mercaptométhyl)-1,3-propanedithiol, le pentaérythritol tétrakis(3-mercaptopropionate), le 1,3,5-benzènetrithiol, le 2,4,6-toluènetrithiol, le 2,4,6-méthylènetrithiol, et les polythiols correspondant aux formules : 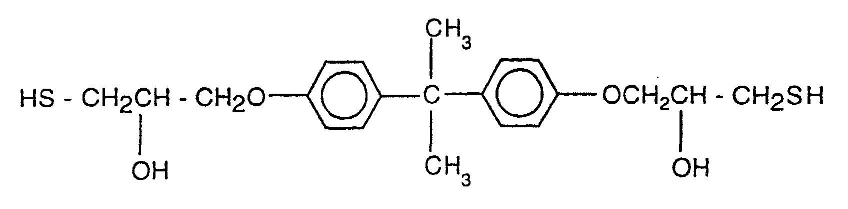 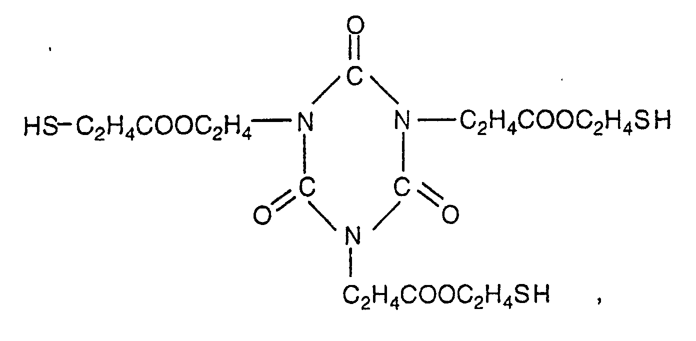 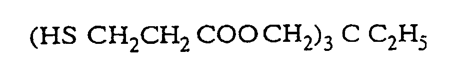 (TTMP), et le 4-mercaptométhyl-3,6-dithia-1,8-octanedithiol.

Les polythiols préférés selon la présente invention sont l'éthylèneglycol bis(thioglycolate), le triméthylolpropane tris(3-mercaptopropionate), le pentaérythritol tétrakis thiopropionate (PETP), le 4-mercaptométhyl-3,6-dithia-1,8-octanedithiol (MDO), et le bis (2-mercaptoéthyl)sulfure (DMDS).

En général, le composant polythiol est présent dans les compositions polymérisables à raison de 5 à 60% en poids, de préférence de 10 à 50% en poids, et mieux de 20 à 50% en poids, par rapport au poids total des monomères présents dans la composition.

Le second constituant monomère essentiel des compositions polymérisables pour la fabrication des lentilles ophtalmiques selon l'invention, est un monomère copolymérisable à haut nombre d'Abbe comportant deux à quatre groupes terminaux généralement choisis parmi les groupes de formules : 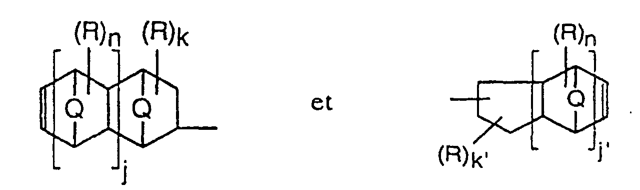 de préférence des groupes de formules : 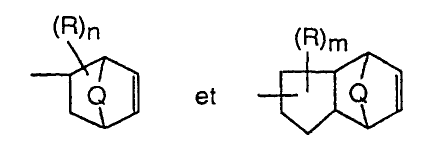 dans lesquelles Q, R, n, m, k, k',j et j' sont définis comme précédemment.

De manière générale, les monomères copolymérisables à haut nombre d'Abbe comportant deux ou plus groupes terminaux cycliques pontés préférés tels que définis ci-dessus répondent à la formule :

Z(̵A)ₙa (I)

dans laquelle n^{a} est un entier de 2 à 4 et A est un radical choisi parmi les radicaux de formules 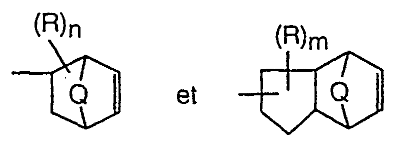 dans lesquelles Q représente -C(R')₂, -O-, -S-, -SO₂- et -NR' -, où R' représente H ou un radical alkyle en C₁-C₃, de préférence CH₃, R représente H ou un radical alkyle en C₁-C₃, de préférence CH₃, n=0-5 et m=0-8, et
(I) lorsque n^{a}=2, Z représente un radical divalent de formule : 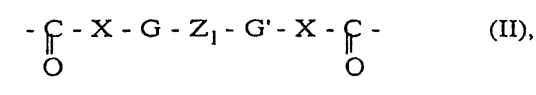 ou

   - S - Z₂ - S - (III)

   dans lesquelles X représente -O- ou -S-, G et G' sont des groupes 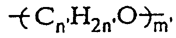 avec n'=1 à 5, de préférence n'=2, et m' varie de 0 à 10, ou un groupe alkylène en C₁-C₅ ; Z₁ est choisi parmi les radicaux divalents de formules : 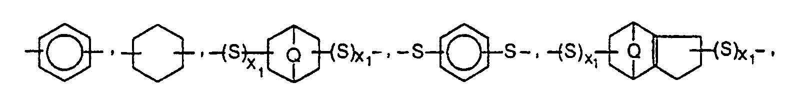 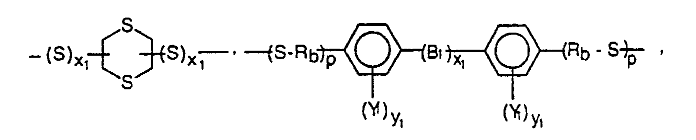 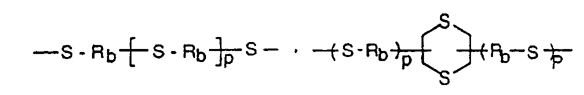 et 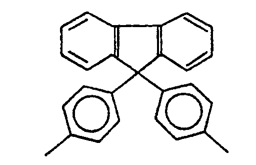 dans lesquelles Q est défini comme ci-dessus, B₁ représente - C(R₂)₂- ou -S-, et R₂ est un radical alkyle en C₁-C₃, de préférence -CH₃, et x₁=0 ou 1, Y₁ représente, indépendamment les uns des autres, Br, Cl ou H, y₁ est un entier de 0 à 4, les groupements R_{b} désignent, indépendamment les uns des autres, un groupe 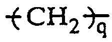 et q est un entier de 1 à 4, de préférence égal à 1 ou 2, et p est un entier de 0 à 4, de préférence de 0 à 2; et
   Z₂ est un radical divalent choisi parmi les radicaux de formules : 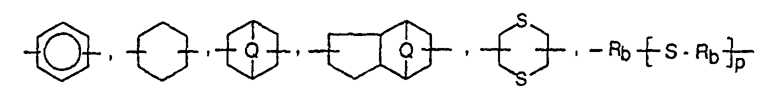 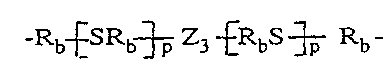 où Q, R_{b} et p sont définis comme ci-dessus et Z₃. est un radical divalent choisi parmi : 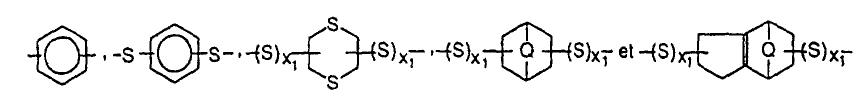 où Q et x₁ sont définis comme précédemment ;
**(II)** lorsque n^{a}=3, Z représente un radical trivalent choisi parmi : 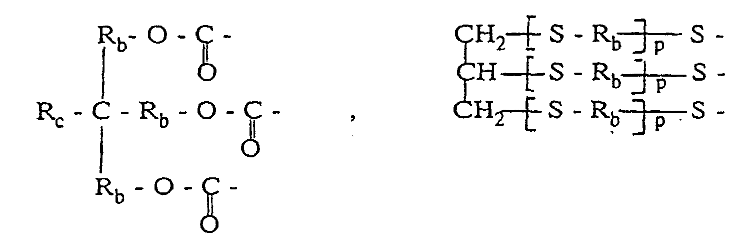 et 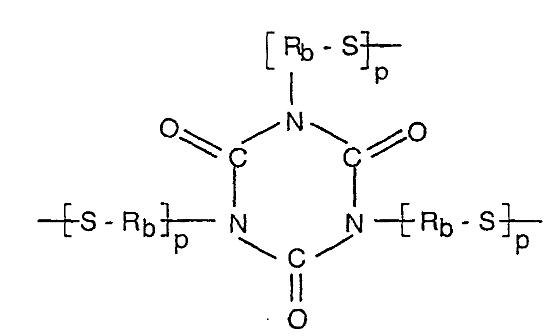 où R_{b} et p sont définis comme précédemment et R_{c} représente H ou un groupe alkyle en C₁-C₃, de préférence -CH₃ ; et
**(III)** lorsque n^{a}=4, Z représente un radical tétravalent choisi parmi les radicaux : 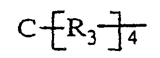 où R₃ est un radical alkylène en C₁-C₅ ou un radical 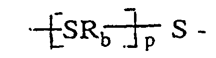 où R_{b} et p sont définis comme précédemment.

Une première classe de constituants monomères à groupes terminaux cycliques pontés entrant dans le cadre de la formule générale (I) ci-dessus, sont les monomères de formule : 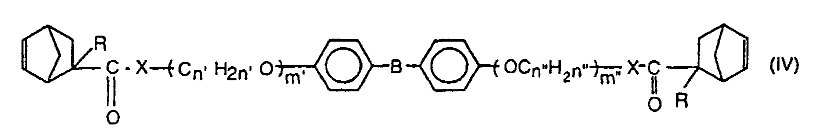 où R, X sont définis comme précédemment, B est -S- ou -C (CH₃)₂-, n' et n" = 1 à 5 et m' et m" varient de 0 à 10.

Un monomère de formule (IV) recommandé est le composé de formule :

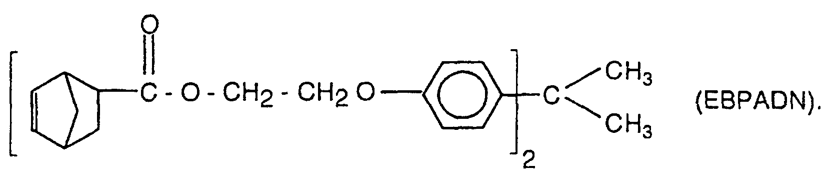

Des monomères répondant à la formule (IV) ainsi que leur procédé de préparation, sont décrits dans le document de brevet WO 88/02902.

Une autre classe recommandée de constituants monomères comportant deux groupes terminaux cycliques pontés selon l'invention, sont les monomères de formule : 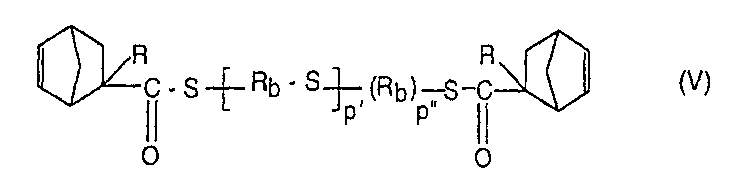 où R=H ou CH₃, R_{b} est tel que défini précédemment, de préférence un radical propylène, p'est un entier de 1 à 3, de préférence égal à 2 et p" est un entier égal à 0 ou 1.

Un monomère de formule (V) recommandé est le monomère de formule : 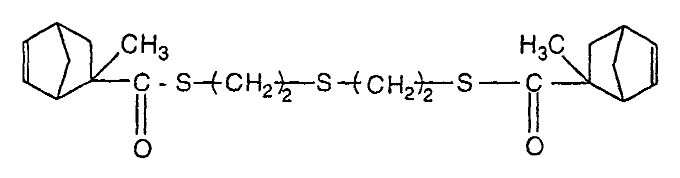 (DTMNSME) ou dithiométhanorbornème de sulfure de mercaptoéthyle.

Ces composés de formule (V) sont nouveaux.

Parmi les monomères de formule (III) ci-dessus, on peut citer les monomères pour lesquels Z₂ représente les groupes suivants :

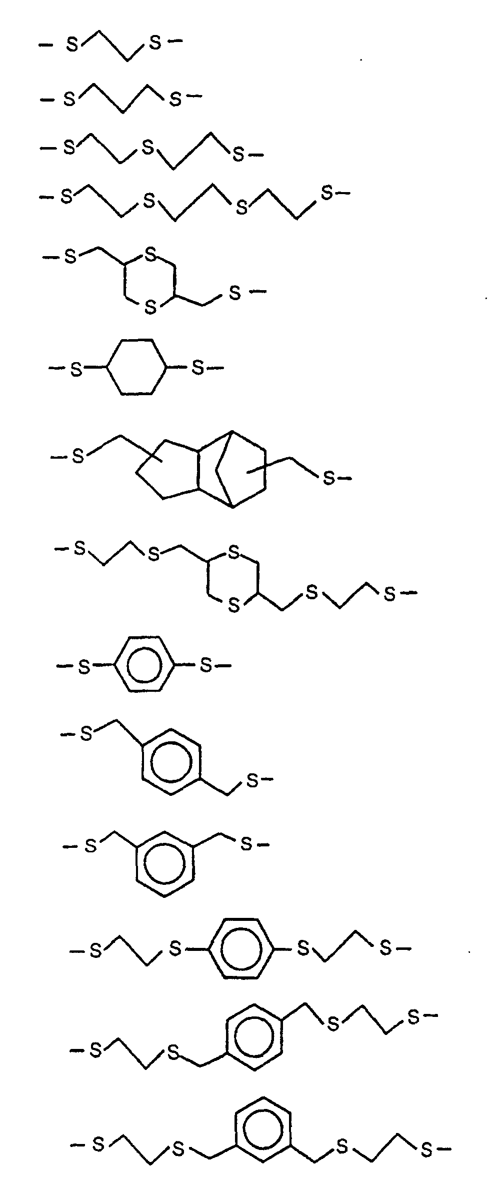

De tels monomères sont décrits ainsi que leur procédé de préparation dans le document de brevet JP-81 51360.

Parmi les constituants monomères trivalents à groupes terminaux cycliques pontés recommandés, on peut citer les monomères de formules : 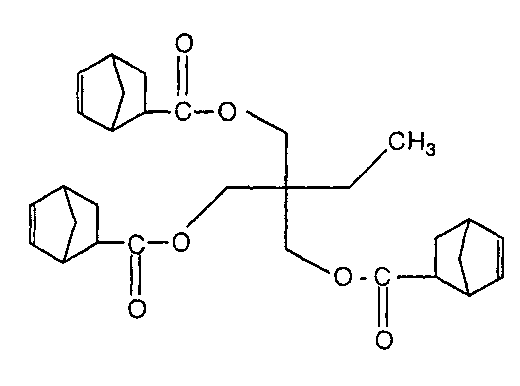 et

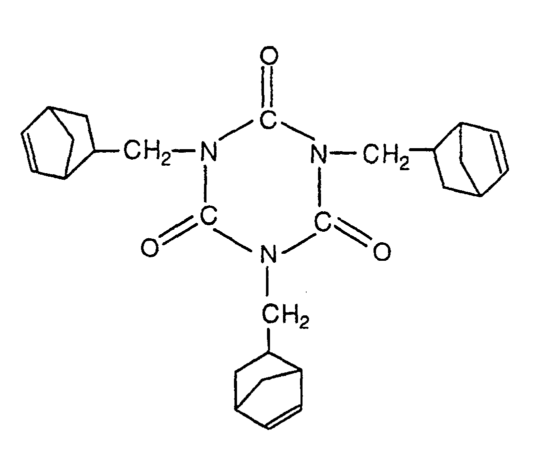

Des composés de ce type, en particulier d'isocyanurate de tris(norbornényle), sont décrits dans le document de brevet US 5 182 360.

Le ou les constituants monomères à groupes terminaux cycliques pontés selon l'invention, sont généralement présents dans la composition polymérisable à raison de 10 à 70% en poids par rapport au poids total des constituants monomères, de préférence à raison de 20 à 70% en poids, et mieux à raison de 30 à 70% en poids.

Les monomères de formule (**II**) dans lesquels X représente -S-sont des produits nouveaux.

Les compositions polymérisables selon l'invention peuvent également contenir d'autres monomères additionnels copolymérisables avec les monomères précédents, en particulier des monomères thio(méth) acrylates tels que les monomères répondant à la formule : 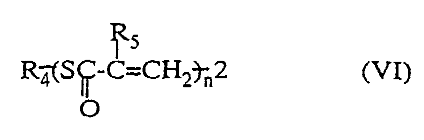 dans laquelle :
R₄ représente un radical hydrocarboné aliphatique, linéaire ou ramifié, monovalent ou polyvalent, un groupement aromatique ou hétérocyclique monovalent ou polyvalent directement lié à l'atome de soufre du ou des groupements thio(méth)acrylates par un noyau ou par l'intermédiaire d'une chaîne alkyle linéaire, le radical R₄ pouvant comporter dans sa chaîne un ou plusieurs groupes choisis parmi -O-, -S-, 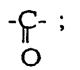
R₅ représente l'hydrogène ou -CH₃; et
n² est un entier de 1 à 6, de préférence de 1 à 3.

Parmi les radicaux R₄ monovalents, on peut citer les radicaux alkyle, linéaires ou ramifiés, de C₁ à C₅, les radicaux de formule : 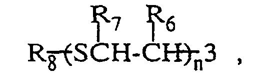 dans laquelle :
R₆ et R₇ sont, indépendamment l'un de l'autre, H ou un radical alkyle, linéaire ou ramifié en C₁-C₅;
R₈ est un radical alkyle, linéaire ou ramifié en C₁-C₅, un radical aralkyle en C₇-C₁₀ ou un radical aryle en C₆-C₁₂, éventuellement substitué, en particulier par des groupes alkyle et/ou halogène; et
n³ est un entier de 1 à 4.

Parmi les radicaux R₃ monovalents préférés, on peut citer :

C₂H₅SCH₂CH₂ - ;

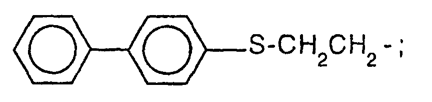

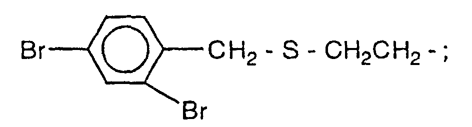

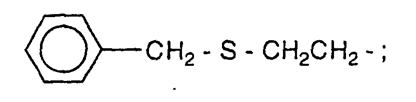

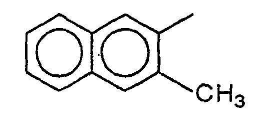

Des monomères de formule (I) pour lesquels n₃=1 et tels que définis ci-dessus, sont décrits, entre autres, dans les brevets US-A-4606864, JP-63316766 et EP-A-0384725.

Parmi les radicaux R₄ divalents entrant dans le cadre des monomères de formule (I), on peut citer les radicaux alkylène, linéaires ou ramifiés, en C₂ à C₁₀ pouvant comporter dans leur chaîne un ou plusieurs groupes -O-, -S- ou 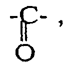 les radicaux alkylidène de formule 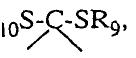 dans laquelle R₉ et R₁₀ sont des radicaux alkyle en C₁-C₅, les radicaux de formule : 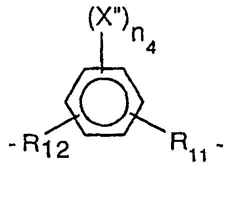 dans laquelle R₁₁ et R₁₂ sont des groupes alkylène, linéaires ou ramifiés, en C₁-C₅ pouvant comporter un ou plusieurs groupes -O-, -S- ou 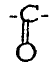 dans leurs chaînes et X" est choisi parmi les radicaux alkyle en C₁-C₅ et les halogène, et n⁴ est un entier de 0 à 4, et les radicaux de formule : 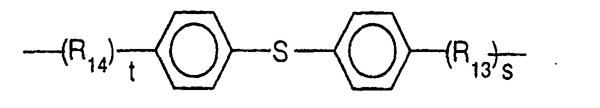 dans laquelle R₁₃ et R₁₄ sont des radicaux alkyle, linéaires ou ramifiés en C₁ à C₅, pouvant comporter dans leur chaîne un ou plusieurs groupes -O-, -S- ou 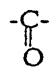 et t et s sont égaux à 0 ou 1.

Parmi les radicaux R₄ divalents préférés, on peut citer les radicaux : 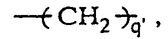 où q' est un entier de 1 à 8 ; 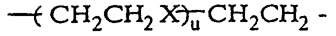 où X est -O- ou -S-, et u est un entier de 1 à 4 ; 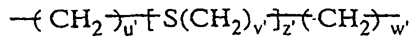 où z' est égal à 0 ou 1, et u', v', w' sont des entiers de 2 à 6 ; 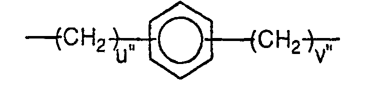 où u" et v" sont des entiers de 1 à 4,

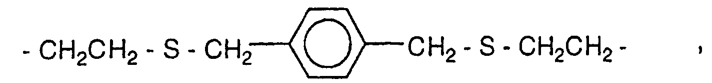

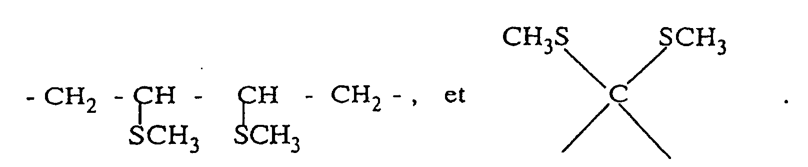

Les radicaux R₄ divalents particulièrement préférés sont : 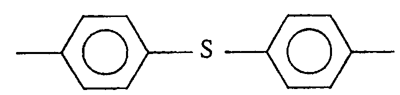 et -H₄C₂-S-C₂H₄-

Des monomères de formule (VI) divalents sont décrits, entre autres, dans les brevets EP-A-273661, EP-A-273710, EP-A-384725.

Parmi les radicaux R₄ trivalents des monomères de formule (VI), on peut citer les radicaux alkyltriyle en C₃ à C₁₀ pouvant comporter dans leur chaîne, un ou plusieurs groupes -O-, -S- ou 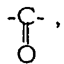 les radicaux alkylaryle trivalents dont les chaînes alkyle peuvent comporter un ou plusieurs groupes -S- ou -O-, et les groupes aryle trivalents.

Parmi les radicaux R₄ trivalents ou de valence supérieure, on peut citer : 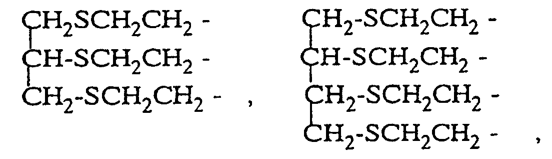 etc...

Parmi les monomères de formule (VI) recommandés dans la présente invention, on peut citer : 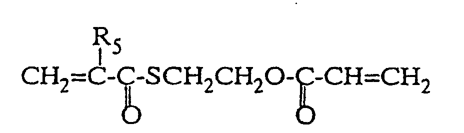 S-2-acryloyloxyéthylthio(méth)acrylate, 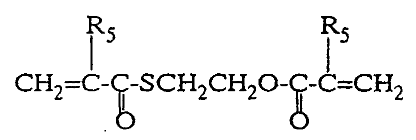 S-2-methacryloyloxyéthylthio(méth)acrylate, 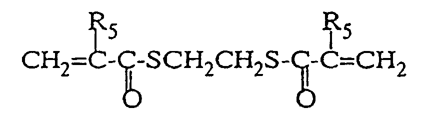 1,2-bis[(méth)acryloylthio]éthane, 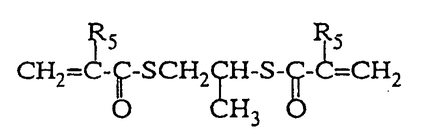 1,2-bis[(méth)acryloylthio]propane, 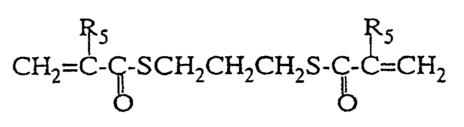 1,3-bis[(méth)acryloylthio]propane, 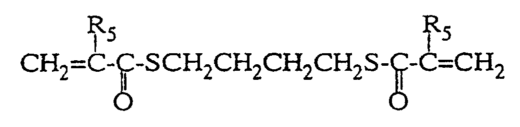 1,4-bis[(méth)acryloylthio]butane, 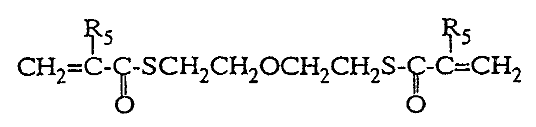 bis-2-[(méth)acryloylthioéthyl]éther, 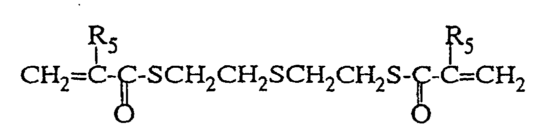 bis-2-[(méth)acryloylthioéthyl]sulfure, 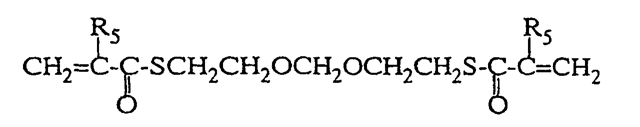 bis-2-[(méth)acryloylthioéthoxy]méthane, 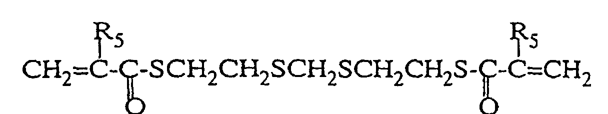 bis-2-[(méth)acryloylthioéthylthio]méthane, 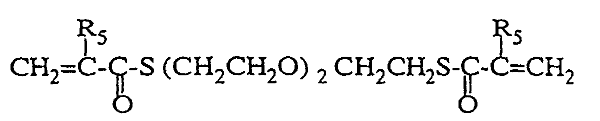 1,2-bis-[2-(méth)acryloylthioéthoxy]éthane, 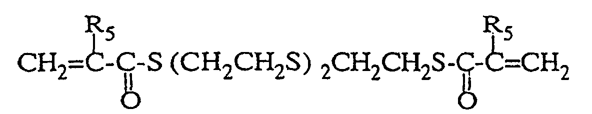 1,2-bis-[2-(méth)acryloylthioéthylthio]éthane, 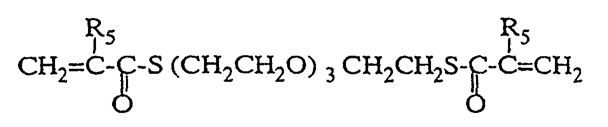 bis-[2-(2-(méth)acryloylthioéthoxy)éthyl]éther, 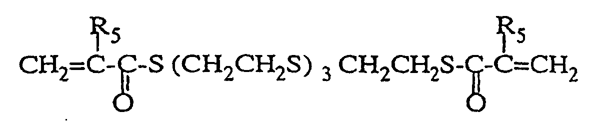 bis-[2-(2-(méth)acryloylthioéthylthio)éthyl]sulfure, 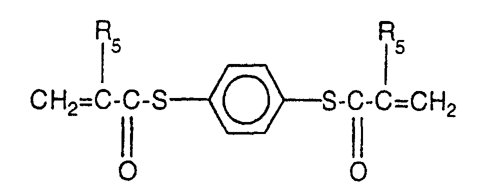 1,4-bis[(méth)acryloylthio]benzène, 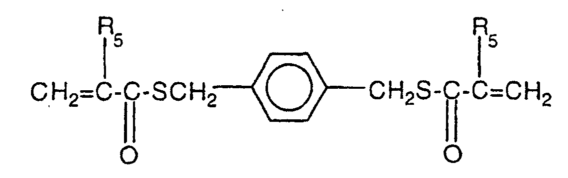 1,4-bis[(méth)acryloylthiométhyl]benzène, 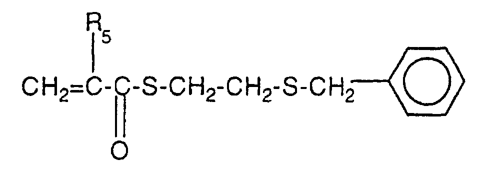 Benzylthioéthylthio(méth)acrylate, 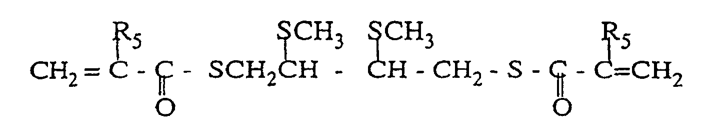 1,4-[bis(méth)acryloylthio]-2,3-diméthylthiobutane, 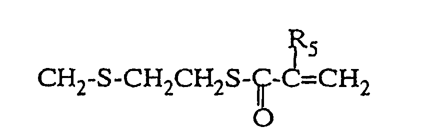 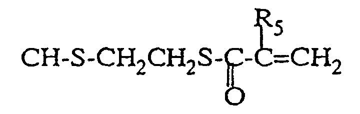 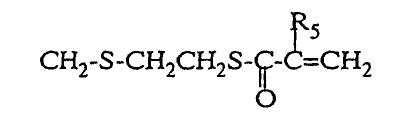 1,2,3-tris[(méth)acryloylthioéthyl]thiolpropane, et 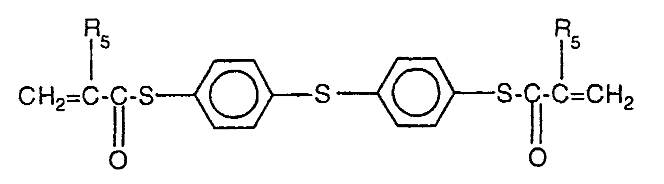 bis[(méth)acryloylthiophényl]sulfure,
où R₅ représente un atome d'hydrogène ou un groupe méthyle.

Les monomères tout particulièrement recommandés dans la présente invention sont le bis(4-méthacryloylthiophényl)sulfure (BMTPS) et le bis(2-méthacryloylthioéthyl)sulfure (BMTES).

Une autre classe de monomères thio(méth)acryliques convenant dans les compositions de monomères selon l'invention, répondent à la formule : 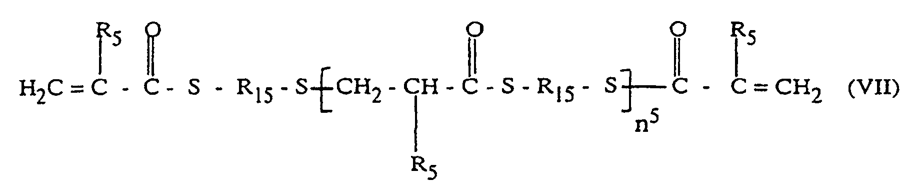 dans laquelle R₅ représente H ou CH₃, R₁₅ représente un groupe alkylène, éventuellement ramifié, en C₂-C₁₂, un groupe cycloalkylène en C₃-C₁₂, un groupe arylène en C₆-C₁₄ ou un groupe alkarylène en C₇-C₂₆, la chaîne carbonée du groupe R₁₅ pouvant être interrompue par un ou plusieurs groupes éther ou thioéther, et n⁵ est un entier de 1 à 6.

De tels monomères sont décrits dans le brevet US 5 384 379.

Ces comonomères polymérisables, lorsqu'ils sont présents, peuvent représenter de 10 à 60% en poids de la composition par rapport au poids total des monomères présents, de préférence 20 à 50% en poids.

Les compositions polymérisables selon l'invention peuvent également comporter des additifs classiquement utilisés dans les compositions polymérisables pour le moulage d'articles optiques, en particulier des verres de lunette, dans des proportions classiques, à savoir des inhibiteurs, des colorants, des absorbeurs UV, des parfums, des déodorants, des antioxydants et des absorbants anti-jaunissement.

Comme exemples préférentiels d'agents antioxydants, on peut citer le triphénylphosphine (TPP) et l'Irganox® 1010 (pentaérythritoltetrakis[3(3,5-di-tert. butyl-4-hydroxyphényl)propionate] (CG1010).

Les parfums permettent de masquer l'odeur des compositions, en particulier lors des opérations de surfaçage.

Les compositions selon l'invention comprennent généralement des amorceurs de polymérisation, de préférence des photoamorceurs ou des mélanges de photoamorceurs et d'amorceurs thermiques, en proportion de 0,001 à 5% en poids par rapport au poids total des monomères polymérisables contenus dans la composition.

Parmi les photoamorceurs utilisables dans les compositions polymérisables selon l'invention, on peut citer en particulier, l'oxyde de 2,4,6-triméthylbenzoyldiphénylphosphine, la 1-hydroxycyclohexyl phénylcétone, la 2,2-diméthoxy-1,2-diphényléthane 1-one, les alkylbenzoyléthers, le photoamorceur commercialisé par la Société CIBA-GEIGY sous la dénomination CGI 1700, qui est un mélange 25/75 d'un composé de formule : 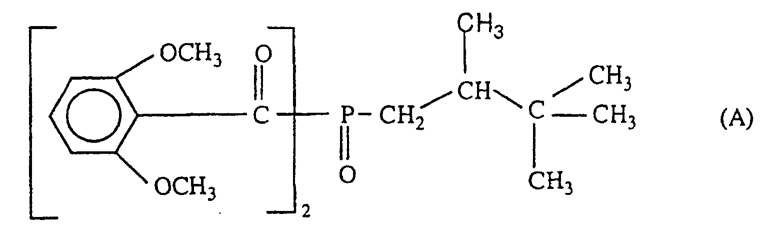 et d'un composé de formule : 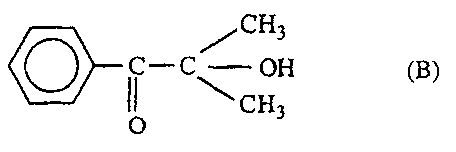 et le photoamorceur CGI 1850 commercialisé par la Société CIBA GEIGY qui est un mélange (50/50) (en poids) de composé A et d'Irgacure® 184 de formule :

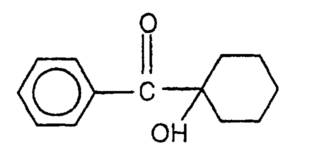

Comme indiqué précédemment, les compositions polymérisables préférées selon l'invention sont des compositions photopolymérisables comportant un ou plusieurs photoamorceurs.

De préférence encore, les compositions polymérisables selon l'invention sont des compositions photo- et thermopolymérisables comprenant à la fois un photoamorceur de polymérisation et un amorceur thermique de polymérisation.

Les amorceurs de polymérisation thermique sont des composés bien connus dans la technique et on peut citer parmi ceux-ci les péroxydes tels que le péroxyde de benzoyle, le péroxydicarbonate de cyclohexyle, le péroxydicarbonate d'isopropyle.

Les monomères de formule (I) peuvent être synthétisés, soit par réaction de Diels Alder entre un composé comportant deux ou plus fonctions (méth)acrylate ou thio(méth)acrylate et un cycloalcène tel que le cyclopentadiène, le norbornadiène ou par addition de type thiol/ène entre un composé polythiol et un composé ène tel que le cyclopentadiène, le norbornadiène, le vinylnorbornène ou l'éthylidène norbornène.

On fait réagir le composé polythiol et le composé ène dans des proportions correspondant sensiblement à un groupement thiol du ou des composés polythiol par mole de composé ène.

A titre d'exemple, on indique ci-après le schéma de synthèse de monomères à haut nombre d'Abbe selon l'invention, à partir de 5-vinyl-2-norbornène ou 5-éthylidène-2-norbornène avec un dithiol : 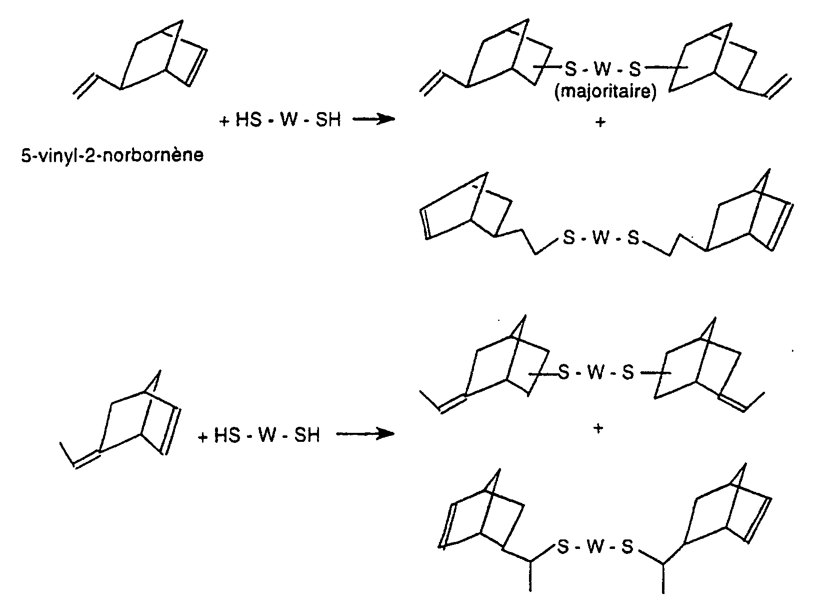 où W est un radical aliphatique ou aromatique.

Dans les exemples suivants, sauf indication contraire, toutes les parties et pourcentages sont exprimés en poids.

### Exemples de synthèse de monomères de formule (I) par la réaction de Diels Aider.

### 1) Synthèse du bisphénol-A 2-éthoxylé dinorbornène (EBPADN) :

Dans un tricol équipé d'une agitation mécanique, d'une ampoule d'introduction de réactif et d'un condenseur, on introduit 700 g de bisphénol-A 2-éthoxylé diacrylate (EBPADA) SARTOMER® SR 349. L'EBPADA avait un indice de réfraction n_{D} à 21°C de 1,5465 et une densité à 21°C de 1,1478.

On effectue alors un dégazage du monomère acrylique au moyen d'une pompe primaire, puis on introduit du diazote dans le tricol. On ajoute alors, goutte à goutte, par l'ampoule, 198 g de cyclopentadiène (CPD) fraîchement craqué. La température du milieu réactionnel monte au fur et à mesure que s'effectue la réaction de Diels-Alder entre le cyclopentadiène et le diacrylate. On évacue alors l'excès de cyclopentadiène en alternant le vide au moyen de la pompe primaire et l'introduction de diazote dans le tricol. On achève l'évacuation de l'excès de cyclopentadiène au moyen d'un évaporateur rotatif. Si on observe la présence d'impuretés, on filtre alors le monomère obtenu au moyen d'un Bêcher à vide.

On obtient le produit attendu, EBPADN, ayant une masse molaire de 556, un indice de réfraction n_{D} à 21°C de 1,5497, une densité à 21°C de 1,1569 avec un rendement de 93,53%.

### 2) Synthèses du triméthylol propane trinorbornène (TMPTN) :

On procède comme dans l'exemple de synthèse précédant, mais sans évacuation finale de l'excès de CPD, au moyen d'un évaporateur rotatif pour éviter une prise en masse.

Dans cette synthèse, on a utilisé 338 g de triméthylol propane triacrylate, masse molaire 296, indice de réfraction n_{D} à 21°C 1,4752 et densité à 21°C 1,10067, produit commercialisé par la Société CRAY VALLEY sous la référence SR 351, et on a ajouté 217 g de cyclopentadiène.

On a obtenu le produit attendu, TMPTN, de masse molaire 494, d'indice de réfraction n_{D} à 21°C de 1,511 et de densité à 21°C de 1,146, avec un rendement supérieur à 95%.

### 3) Synthèse du dithiométhanorbornène de sulfure de mercaptoéthyle (DTMNSME) :

On procède comme dans l'exemple de synthèse 1, en utilisant comme produit de départ 211 g de bis[(2-méthacryloylthio)éthyl]sulfure (BMTES); masse molaire 282, n_{D} à 21°C 1,5745, densité à 21°C 1,177, et 100 g de cyclopentadiène.

On obtient le produit attendu (DTMNSME) ayant une masse molaire de 414, un indice de réfraction n_{D} à 21°C de 1,5683, une densité à 21°C de 1,1588, avec un rendement supérieur à 95%.

Il faut noter que la réactivité d'un thiométhacrylate est très supérieure à celle du méthacrylate correspondant (qui aurait nécessité pour la réaction un catalyseur du type acide de Lewis).

### 4) Exemples de synthèse à partir de 5-vinyl-2-norbornène et de 5-éthylidène-2-norbornène

### EXEMPLE DE SYNTHESE 1 :

Dans un réacteur muni d'un condenseur, d'une agitation magnétique et d'une alimentation d'azote permettant de travailler sous atmosphère inerte, on introduit 12,6 g de 5-vinyl-2-norbornène (pureté 95%). On chauffe à 70°C et on additionne 8,5 g de 2-mercaptoéthyl sulfure en 30 minutes à l'aide d'une ampoule à addition. Au cours de l'addition, on observe une exothermie et la température du milieu réactionnel atteint 165°C. La réaction est suivie par infrarouge jusqu'à disparition totale de la bande -S-H à 2571 cm⁻¹. Le produit présente un indice de réfraction de 1,571 à 25°C.

### EXEMPLE DE SYNTHESE 2 :

On opère de la même manière qu'à l'exemple de synthèse 1, en utilisant 11,2 g de 4-mercaptométhyl-3,6-dithia-1,8-octane dithiol (pureté 93%) et 15,2 g de 5-vinyl-2-norbornène. La température maximale atteinte au cours de l'addition d thiol est de 79°C. Le produit obtenu présente un indice de réfraction de 1,579 à 25°C.

### EXEMPLE DE SYNTHESE 3 :

On opère de la même manière qu'à l'exemple de synthèse 1, en utilisant 12,2 g de pentaérythritol tétrakis (3-mercaptopropionate) et 12,6 g de 5-vinyl-2-norbornène. La température maximale atteinte au cours de l'addition du thiol est de 134°C. Le produit obtenu présente une viscosité de 0,48 Pa.s à 25°C et un indice de réfraction de 1,531 à 25°C.

### EXEMPLE DE SYNTHESE 4 :

On opère de la même manière qu'à l'exemple de synthèse 1, en utilisant 12,2 g de pentaérythritol tétrakis (3-mercaptopropionate) et 12 g de 5-éthylidène-2-norbornène (pureté 99%). La température maximale atteinte lors de l'addition du thiol est de 95°C. Le produit obtenu présente une viscosité de 7,66 Pa.s à 25°C et un indice de réfraction de 1,5445 à 25°C.

On a réalisé par mélange des constituants indiqués dans le tableau I ci-après, les compositions 1 à 6 de l'invention.

Ces compositions sont ensuite coulées dans un moule en verre minéral en deux parties, et polymérisées pour obtenir des lentilles ophtalmiques selon l'invention.

On a déterminé sur ces lentilles l'indice de réfraction à 21°C, le nombre d'Abbe, la densité à 21°C, la température de transition vitreuse, l'aptitude à la coloration et l'odeur.

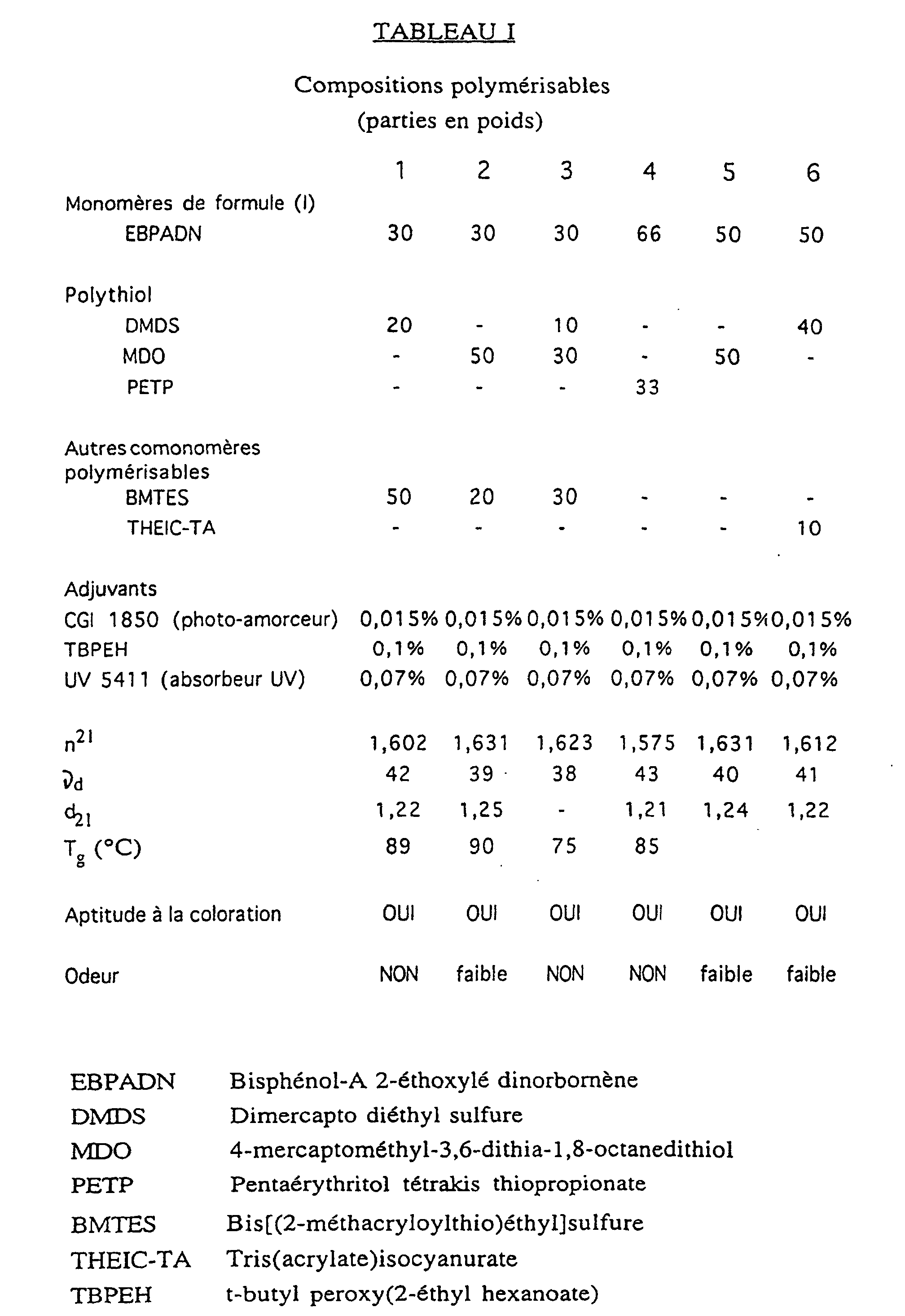

## Revendications

1. Lentille ophtalmique constituée d'un matériau organique polymère transparent de haut indice de réfraction et haut nombre d'Abbe, **caractérisée en ce que** le matériau organique polymère transparent résulte de la polymérisation d'un mélange de monomères comprenant :
- au moins un monomère polythiol ; et
- au moins un monomère à haut nombre d'Abbe comprenant deux à quatre groupes terminaux cycliques pontés comportant une double liaison éthylénique intracyclique ou un reste aliphatique, linéaire ou ramifié, comportant une insaturation éthylénique, de préférence un groupe vinyle ou éthylidène directement lié à un carbone du cycle.

2. Lentille ophtalmique selon la revendication 1, **caractérisée en ce que** les groupes terminaux cycliques pontés sont choisis parmi les groupes de formules : 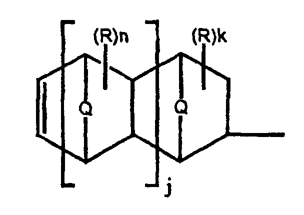 où n est un entier de 0 à 5 inclus, k es un entier de 0 à 3 inclus et j est un entier de 0 à 10 inclus, et 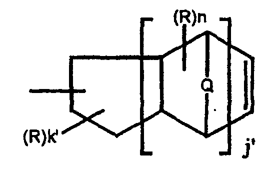 où n est un entier de 0 à 5, k' est un entier de 0 à 2 et j' est un entier de 0 à 10, Q représente un groupe -C(R')₂- , -O-, -S-, -NR'- ou SO₂ avec R' désignant H ou un radical alkyle en C₁-C₃, de préférence CH₃, et R est un atome d'hydrogène ou un radical alkyle en C₁-C₃, de préférence CH₃.

3. Lentille ophtalmique selon la revendication 1, **caractérisée en ce que** les groupes terminaux cycliques pontés sont choisis parmi les groupes de formules : 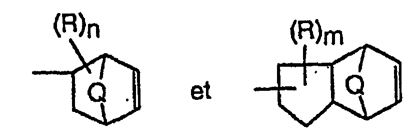 dans lesquelles Q représente un radical divalent choisi parmi -C(R')₂-, -O-, -SO₂- et -NR', R' étant un atome d'hydrogène
ou un radical alkyle en C₁-C₃, Q étant de préférence un radical -CH₂-, et R représente un atome d'hydrogène ou un radical alkyle en C₁-C₃, de préférence un radical méthyle, n=0 à 5 et m=0 à 8.

4. Lentille ophtalmique selon la revendication 3, **caractérisée en ce que** le monomère à haut nombre d'Abbe a pour formule :
Z(̵A)ₙa (I)
où A est un groupe cyclique ponté tel que défini dans la revendication 3, et n^{a} est un entier de 2 à 4, et
(I) lorsque n^{a}=2, Z est un radical divalent de formules : 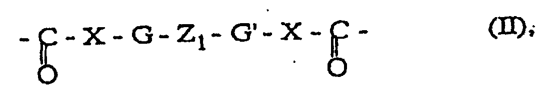 ou
-S-Z₂-S- (III)
dans lesquelles X représente -O- ou -S-, G et G' sont des groupes -(Cₙ,H₂ₙ,O)-ₘ, avec n'=1 à 5, de préférence n'=2, et m' varie de 0 à 10, ou un groupe alkylène en C₁-C₅ ; Z₁ est choisi parmi les radicaux divalents de formules : 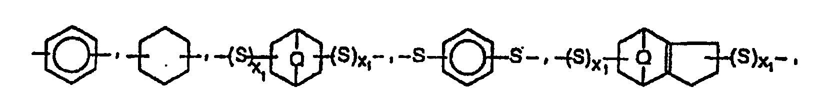 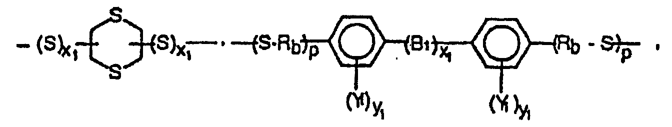 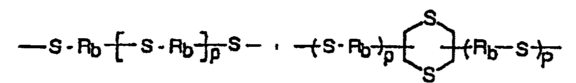 et 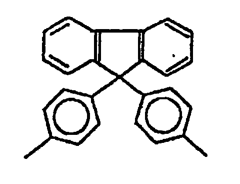 dans lesquelles Q est défini comme précédemment, B₁ est un radical divalent choisi parmi -C(R₂)₂-, -S- et -SO₂- ou R₂ est un radical alkyle en C₁-C₃, de préférence un radical -CH₃, et x₁=0 ou 1, Y₁ représente, indépendamment, Br, Cl ou H, y₁ est un entier de 0 à 4, R_{b} est un groupe -(Cₙ,H₂ₙ,O)-ₘ, q étant un entier de 1 à 4, de préférence égal à 1 ou 2, et p est un entier de 0 à 4, de préférence de 0 à 2 ; et Z₂ est un radical divalent choisi parmi les radicaux de formule : 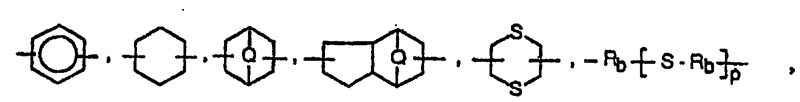 et 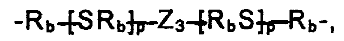 où Q, R_{b} et p sont définis comme ci-dessus, et Z₃ est un radical divalent choisi parmi : 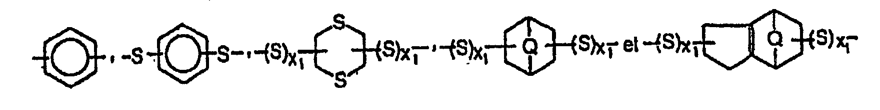 où Q et x₁ sont définis comme ci-dessus ;
(II) lorsque n^{a}=3, Z représente un radical trivalent choisi parmi : 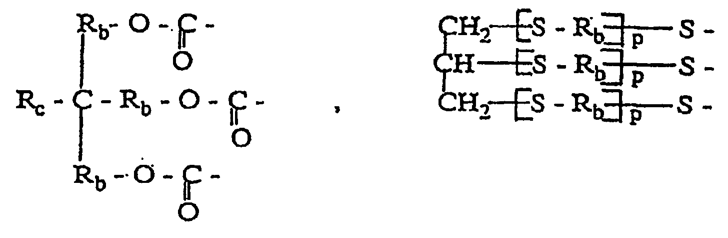 et 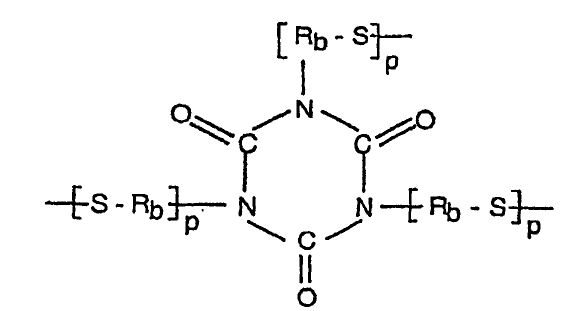 où R_{b} et p sont définis comme ci-dessus, et R_{c} représente H
ou un groupe alkyle en C₁-C₃, de préférence -CH₃ ; et
(III) lorsque n^{a}=4, Z représente un radical tétravalent de formule : 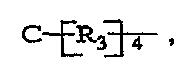
où R₃ est un radical alkylène en C₁-C₅ ou un radical divalent de formule : 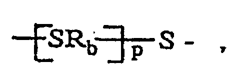 où R_{b} et p sont définis comme ci-dessus.

5. Lentille ophtalmique selon la revendication 4, **caractérisée en ce que** le monomère à haut nombre d'Abbe répond à la formule : 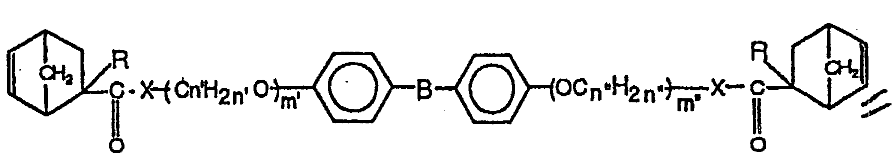 où X est -O- ou -S-, R est H ou CH₃, B est -S- ou -C(CH₃)₂-, n' et n"=1 à 5 et m' et m" varient de 0 à 10.

6. Lentille ophtalmique selon la revendication 5,
**caractérisée en ce que** le monomère à haut nombre d'Abbe a pour formule :

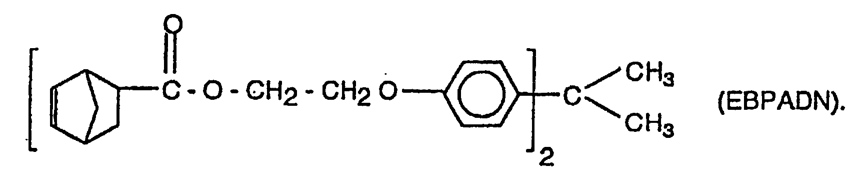

7. Lentille ophtalmique selon la revendication 3, **caractérisée en ce que** le monomère à haut nombre d'Abbe répond à la formule : 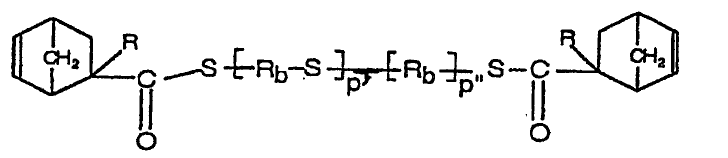 où R est un atome d'hydrogène ou un radical alkyle en C₁-C₃, de préférence CH₃ et R_{b} est un groupe -(CH2)_{q}-, q étant un entier de 1 à 4, de préférence égal à 1 ou 2, p' est un entier de 1 à 3 et p" est un entier égal à 0 ou 1.

8. Lentille ophtalmique selon la revendication 7, **caractérisée en ce que** le monomère à haut nombre d'Abbe répond à la formule :

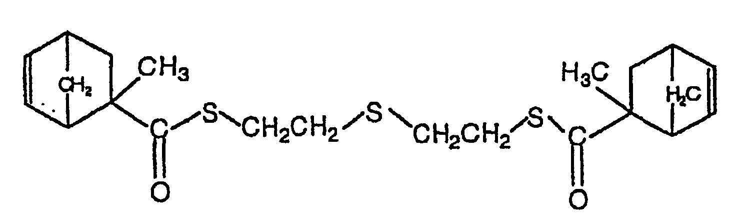

9. Lentille ophtalmique selon l'une quelconque des revendications 1 à 8, **caractérisée en ce que** le monomère polythiol a pour formule R₁(SH)n¹ où n¹ est un entier au moins égal à 2 et R₁ est un radical aliphatique, aromatique ou hétérocyclique.

10. Lentille ophtalmique selon l'une quelconque des revendications 1 à 9, **caractérisée en ce que** le monomère polythiol est un dithiol, trithiol ou un tétrathiol.

11. Lentille ophtalmique selon l'une quelconque des revendications 1 à 10, **caractérisée en ce que** la composition de monomère comprend un ou plusieurs autres comonomères polymérisables additionnels.

12. Lentille ophtalmique selon la revendication 11, **caractérisée en ce que** le ou les autres comonomères additionnels sont choisis parmi les monomères thio(méth)acrylates difonctionnels.

13. Lentille ophtalmique selon l'une quelconque des revendications précédentes, **caractérisée en ce que** le polythiol est choisi parmi le 4-mercaptométhyl-3,6-dithia-1,8-octane dithiol, le bis(2-mercaptoéthyl)sulfure et le pentaérythritol tétrakis thiopropionate:

14. Lentille selon l'une quelconque des revendications précédentes, **caractérisée en ce que** le polythiol représente 10 à 60 % en poids, de préférence 20 à 50 % en poids, par rapport au poids total des monomères polymérisables présents dans la composition.

15. Lentille selon l'une quelconque des revendications précédentes, **caractérisée en ce que** le monomère à nombre d'Abbe élevé représente 10 à 70 %, de préférence 20 à 50 % en poids, par rapport au poids total des monomères présents dans la composition.

16. Lentille selon l'une quelconque des revendications précédentes, **caractérisée en ce que** les autres comonomères additionnels, lorsqu'ils sont présents, représentent 10 à 50 % en poids, par rapport au poids total des monomères présents dans la composition.

17. Lentille selon l'une quelconque des revendications précédentes, **caractérisée en ce que** la lentille est un verre de lunette.

18. Lentille selon la revendication 4, **caractérisée en ce que** le monomère à haut nombre d'Abbe répond à la formule : 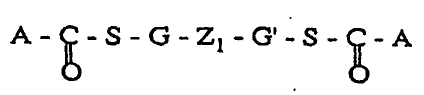 où A, G, G' et Z₁ sont tels que définis à la revendication 4.

19. Lentille selon la revendication 7, **caractérisée en ce que** le monomère à haut nombre d'Abbe répond à la formule:

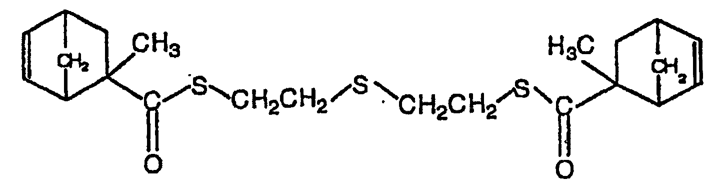

## Claims

1. Ophthalmic lens made of a transparent organic polymer material with a high refractive index and a high Abbe number, **characterized in that** the transparent organic polymer material results from the polymerization of a mixture of monomers comprising :
- at least one polythiol monomer; and
- at least one monomer with a high Abbe number comprising two to four bridged cyclic end groups comprising an intracyclic ethylenic double bond or a linear or branched aliphatic residue comprising an ethylenic unsaturation, preferably a vinyl or ethylidene group bonded directly to a carbon of the ring.

2. Ophthalmic lens according to Claim 1, **characterized in that** the bridged cyclic end groups are selected from groups of formulae : 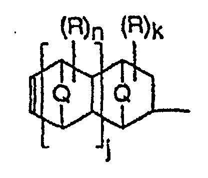 wherein n is an integer from 0 to 5 inclusive, k is an integer from 0 to 3 inclusive and j is an integer from 0 to 10 inclusive, and 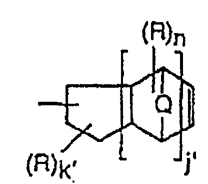 wherein n is an integer from 0 to 5, k' is an integer from 0 to 2 and j' is an integer from 0 to 10, Q represents a -C(R')₂-, -O-, -S-, -NR'- or -SO₂- group, with R' denoting H or a C₁-C₃ alkyl radical, preferably CH₃, and R is a hydrogen atom or a C₁-C₃ alkyl radical, preferably CH₃.

3. Ophthalmic lens according to Claim 1, **characterized in that** the bridged cyclic end groups are selected from groups of formulae : 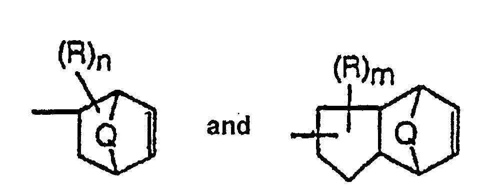 in which Q represents a divalent radical selected from -C(R')₂-, -O-, -SO₂- and -NR'-, R' being a hydrogen atom or a C₁-C₃ alkyl radical, Q preferably being a -CH₂- radical, and R represents a hydrogen atom or a C₁-C₃ alkyl radical, preferably a methyl radical, n = 0 to 5 and m = 0 to 8.

4. Ophthalmic lens according to Claim 3, **characterized in that** the monomer with a high Abbe number has the formula :
Z(̵(A)ₙa (I)
wherein A is a bridged cyclic group as defined in Claim 3 and n^{a} is an integer from 2 to 4, and
**(I)** when n^{a} = 2, Z is a divalent radical of formulae : 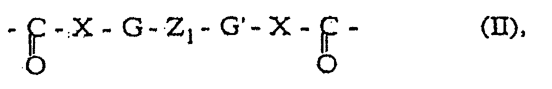 or
-S-Z₂-S- (III)
in which formulae X represents -O- or -S-, G and G' are 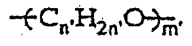 groups, with n' = 1 to 5, preferably n' = 2, and m' varies from 0 to 10, or a C₁-C₅ alkylene group, Z₁ is selected from divalent radicals of formulae : 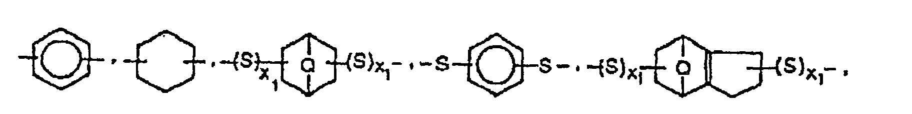 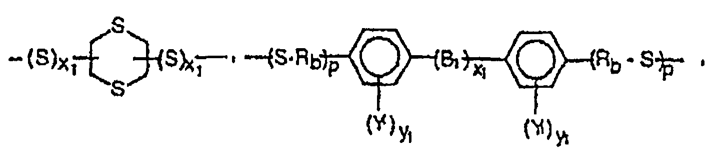 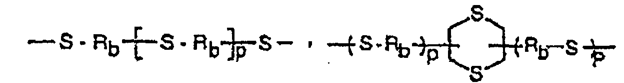 and 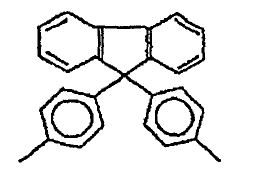 in which formulae Q is defined as above, B₁ is a divalent radical selected from -C(R₂)₂-, -S- and -SO₂-, where R₂ is a C₁-C₃ alkyl radical, preferably a -CH₃ radical, x₁ = 0 or 1, Y₁ independently represents Br, C1 or H, y₁ is an integer from 0 to 4, R_{b} is a -(C_{n'}H_{2n'}O)-_{m'} group, q being an integer from 1 to 4, preferably equal to 1 or 2, and p is an integer from 0 to 4, preferably from 0 to 2 ; and Z₂ is a divalent radical selected from radicals of formulae : 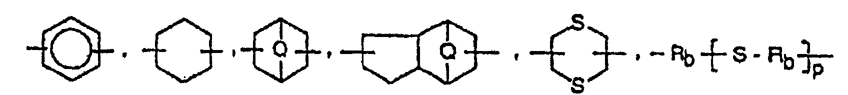 and 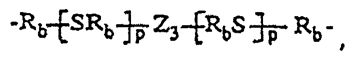 where Q, R_{b} and p are defined as above and Z₃ is a divalent radical selected from : 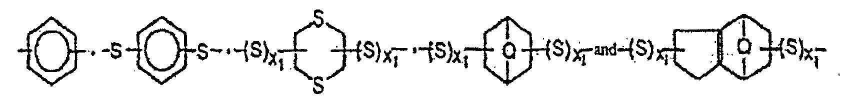 wherein Q and x₁ are defined as above ;
**(II)** when n^{a} = 3, Z represents a trivalent radical selected from : 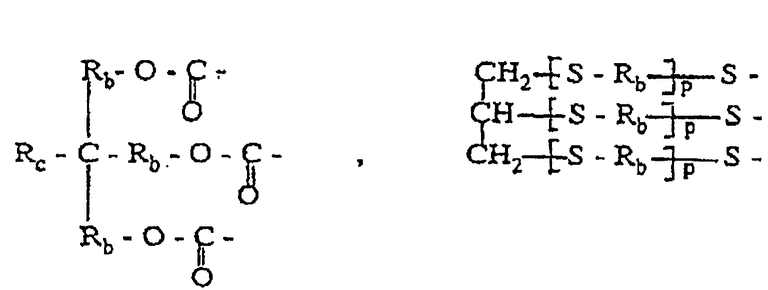 and 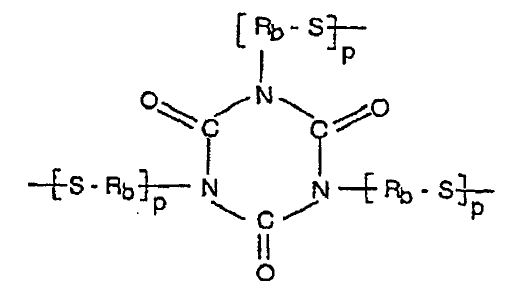 wherein R_{b} and p are defined as above and R_{c} represents H or a C₁-C₃ alkyl group, preferably -CH₃ ; and
**(III)** when n^{a} = 4, Z represents a tetravalent radical of formula : 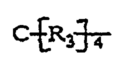 wherein R₃ is a C₁-C₅ alkylene radical or a divalent radical of formula : 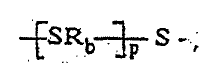 wherein R_{b} and p are defined as above.

5. Ophthalmic lens according to Claim 4, **characterized in that** the monomer with a high Abbe number has the formula: 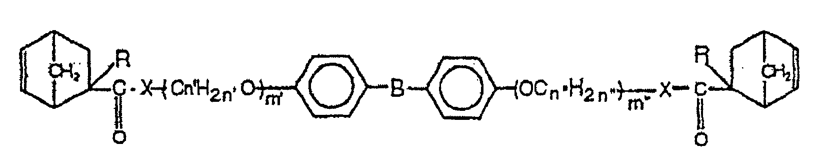 wherein X is -O- or -S-, R is H or CH₃, B is -S- or -C(CH₃)₂-, n' and n" = 1 to 5 and m' and m" vary from 0 to 10.

6. Ophthalmic lens according to Claim 5, **characterized in that** the monomer with a high Abbe number has the formula :

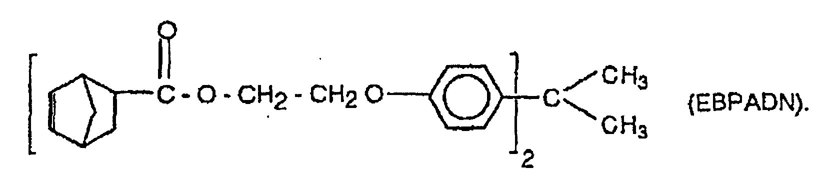

7. Ophthalmic lens according to Claim 3, **characterized in that** the monomer with a high Abbe number has the formula: 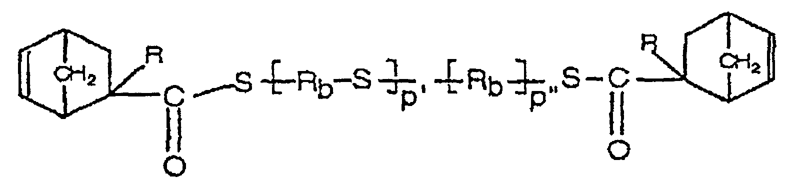 wherein R is a hydrogen atom or a C₁-C₃ alkyl radical, preferably CH₃, and R_{b} is a -(CH₂)_{q}- group, q is an integer from 1 to 4, preferably 1 or 2, p' is an integer from 1 to 3 and p" is an integer equal to 0 or 1.

8. Ophthalmic lens according to Claim 7, **characterized in that** the monomer with a high Abbe number has the formula :

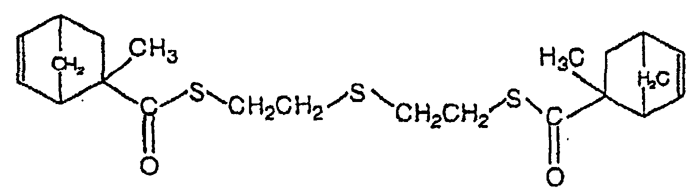

9. Ophthalmic lens according to any one of Claims 1 to 8, **characterized in that** the polythiol monomer has the formula R₁(SH)_{n¹}, wherein n¹ is an integer at least equal to 2 and R₁ is an aliphatic, aromatic or heterocyclic radical.

10. Ophthalmic lens according to any one of Claims 1 to 9, **characterized in that** the polythiol monomer is a dithiol, a trithiol or a tetrathiol.

11. Ophthalmic lens according to any one of Claims 1 to 10, **characterized in that** the monomer composition comprises one or more other additional polymerizable comonomers.

12. Ophthalmic lens according to Claim 11, **characterized in that** the other additional comonomer or comonomers are selected from difunctional thio(meth)acrylate monomers.

13. Ophthalmic lens according to any one of the preceding claims, **characterized in that** the polythiol is selected from 4-mercaptomethyl-3,6-dithia-1,8-octanedithiol, bis(2-mercaptoéthyl) sulphide and pentaerythritol tetrakis(thiopropionate).

14. Lens according to any one of the preceding claims, **characterized in that** the polythiol represents 10 to 60 % by weight, preferably 20 to 50 % by weight, based on the total weight of polymerizable monomers present in the composition.

15. Lens according to any one of the preceding claims, **characterized in that** the monomer with a high Abbe number represents 10 to 70 %, preferably 20 to 50 %, by weight based on the total weight of monomers present in the composition.

16. Lens according to any one of the preceding claims, **characterized in that** the other additional comonomers, when they are present, represent 10 to 50 % by weight based on the total weight of monomers present in the composition.

17. Lens according to any one of the preceding claims, **characterized in that** the lens is a spectacle glass.

18. Lens according to Claim 4, **characterized in that** the monomer with a high Abbe number has the formula: 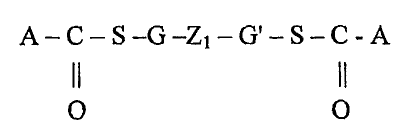 wherein A, G, G' and Z₁ are such as defined in Claim 4.

19. Lens according to Claim 7, **characterized in that** the monomer with a high Abbe number has the formula:

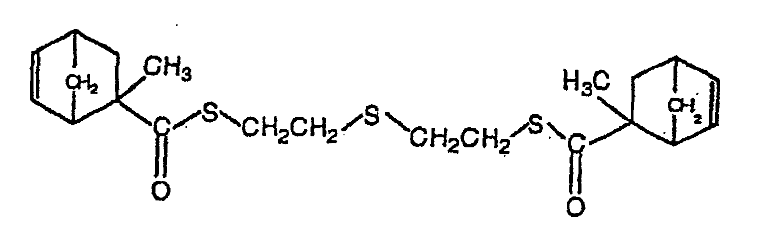

## Patentansprüche

1. Optische Linse aus transparentem polymeren organischen Kunststoffmaterial mit hohem Brechungsindex und hoher Abbezahl , **dadurch gekennzeichnet, daß** das transparente polymere organische Kunststoffmaterial aus der Polymerisierung einer Mischung herrührt, die umfasst :
- mindestens ein Polythiolmonomer
- mindestens ein Monomer mit hoher Abbezahl, das zwei bis vier gebrückte Ringendgruppen aufweist, welche eine doppelte Ringäthylenbindung oder einen linearen oder verzweigten aliphatischen Rest und eine äthylenische Ungesättigtheit , bevorzugt eine Vinyl- oder eine Äthelidengruppe, umfassen , die direkt an einen Kohlenstoffring gebunden ist.

2. Optische Linse nach Anspruch 1, **dadurch gekennzeichnet, daß** die gebrückten Ringendgruppen ausgewählt werden aus den Gruppen mit der Formel : 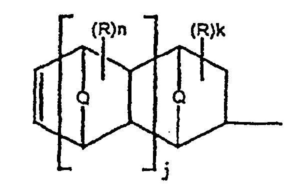 wobei n eine ganze Zahl von 0 bis einschliesslich 5 , k eine ganze Zahl von 0 bis einschliesslich 3 und j eine ganze Zahl von 0 bis einschliesslich 10 ist, und 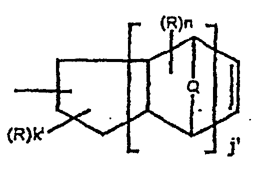 wobei n eine ganze Zahl von 0 bis einschliesslich 5, k' eine ganze Zahl von 0 bis 2 und j' eine ganze Zahl von 0 bis 10 ist, Q eine Cruppe-C(R')₂ -, - O -, - S -, - NR'oder SO₂ repräsentiert, wobei R' H oder ein Alkylradikal in C₁ - C₃, bevorzugt CH₃, bezeichnet, und R ein Wasserstoffatom oder ein Alkylradikal in C₁ - C₃, bevorzugt CH₃, ist.

3. Optische Linse nach Anspruch 1, **dadurch gekennzeichnet, daß** die gebrückten Ringendgruppen ausgewählt werden aus den Gruppen mit der Formel : 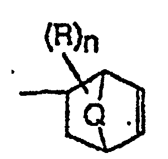 und 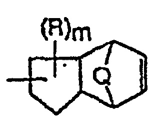 in denen Q ein zweiwertiges Radikal darstellt, das aus - C(R')₂-, - O -, - SO₂-, - NR' gewählt wird, wobei R' ein Wasserstoffatom oder ein Alkylradikal in C₁ - C₃, bevorzugt CH₃, ist und Q bevorzugt ein Radikal CH₂ ist und R ein Wasserstoffatom oder ein Alkylradikal in C₁ - C₃, bevorzugt ein Methylradikal, ist und in dieser Formel n = 0 bis 5 und m = 0 bis 8 bedeutet.

4. Optische Linse nach Anspruch 3, **dadurch gekennzeichnet, daß** das Monomer mit hoher Abbezahl folgende Formel aufweist:
Z(̵A)ₙ ^{a} (I)
wobei A eine wie in Anspruch 3 definierte gebrückte Ringgruppe ist und n^{a} eine ganze Zahl von 2 bis 4 ist, und
(I) wenn n^{a} = 2 ist, ist Z ein zweiwertiges Radikal mit den Formeln : 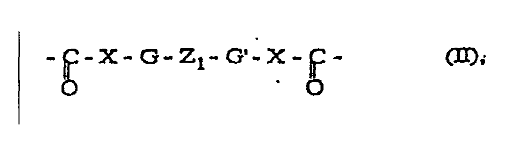 oder 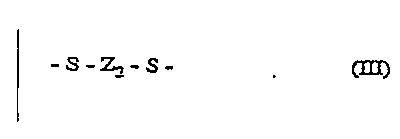 in denen X - O - oder - S - repräsentiert , G und G' Gruppen - (Cₙ' H₂ₙ' O) sind mit n' = 1 bis 5, bevorzugt n'=2, und m' von 0 bis 10 variiert, wobei eine Alkylengruppe in C₁ - C₅; Z₁ aus zweiwertigen Radikalen mit folgenden Formeln ausgewählt wird : 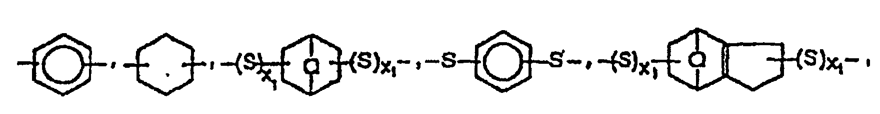 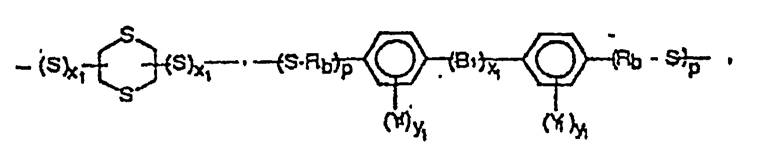 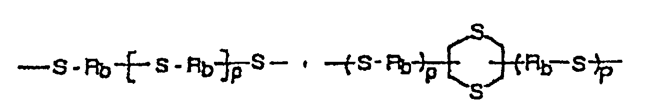 und 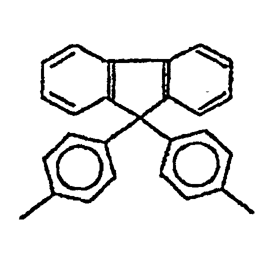 in denen Q wie vorher definiert ist, B₁ ein zweiwertiges Radikal ist, das aus - C(R₂)₂, - S - und - SO₂- gewählt wird oder R₂ ein Alkylradikal in C₁ - C₃, bevorzugt ein Radikal - CH₃, ist und X₁ = 0 oder 1 ist, Y₁ unabhängig Br, Cl oder H repräsentiert, y₁ eine ganze Zahl von 0 bis 4, R_{b} eine Gruppe - (Cₙ, H₂ₙ, O) - ₘ ist, wobei q eine ganze Zahl von 1 bis 4 ist, bevorzugt gleich 1 oder 2, und p eine ganze Zahl von 0 bis 4, bevorzugt von 0 bis2 ist; und Z₂ ist ein zweiwertiges Radikal, das unter den Radikalen mit folgender Formel ausgewählt wird; 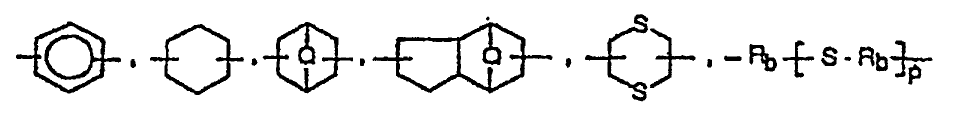 und -R_{b}-[-SR_{b}]―Z₃-[R_{b}S]ₚ―R_{b}-,
wobei Q, Rb und p wie weiter oben definiert ist, und Z₃ ein zweiwertiges Radikal ist, ausgewählt aus : 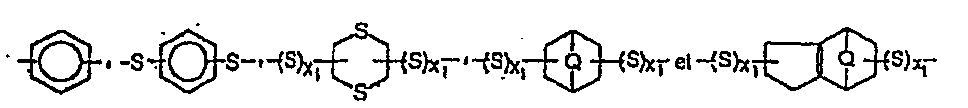 wobei Q und x₁ wie weiter unten definiert sind ;
(II) wenn n^{a} = 3 , stellt Z ein dreiwertiges Radikal dar, ausgewählt aus : 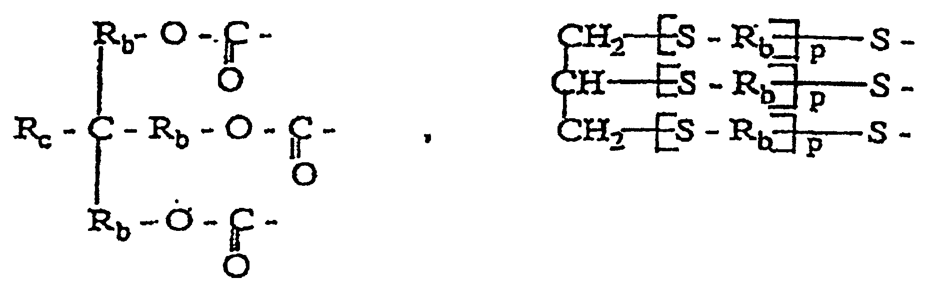 und 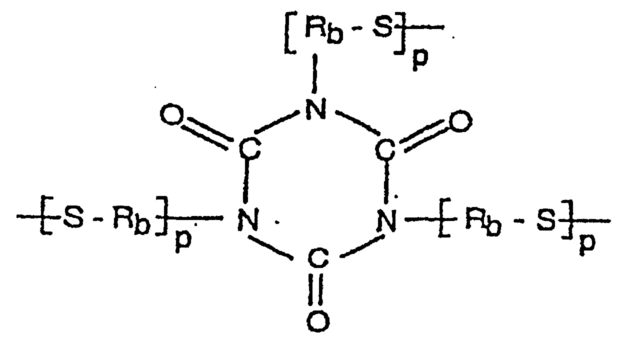 wobei R_{b} und p wie weiter oben definiert sind, und R_{c} H oder eine Alkylgruppe in C₁ - C₃, bevorzugt - CH₃ darstellt; und
(III) wenn n^{a}= 4, stellt Z ein vierwertiges Radikal mit folgender Formel dar : 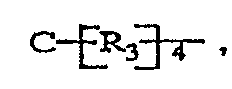 wobei R₃ ein Akylenradikal in C₁ - C₅ oder ein zweiwertiges Radikal mit folgender Formel ist: 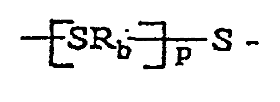 wobei Rb und p wie weiter oben definiert sind.

5. Optische Linse nach Anspruch 4, **dadurch gekennzeichnet, dass** das Monomer mit hoher Abbezahl folgender Formel genügt: 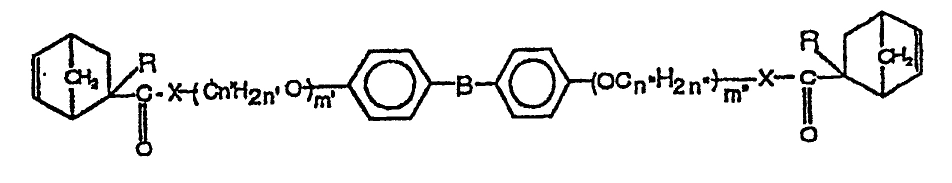 wobei X-O-oder-S-ist, R H oder CH₃ ist, B - S - oder - C (CH₃)₂ - ist, n' und n" = 1 bis 5 und m' und m" von 0 bis 10 variieren.

6. Optische Linse nach Anspruch 5, **dadurch gekennzeichnet, daß** das Monomer mit hoher Abbezahl folgende Formel aufweist:

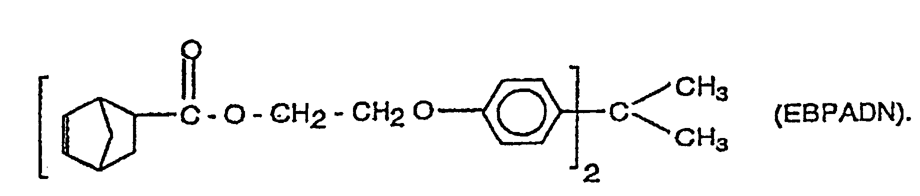

7. Optische Linse nach Anspruch 3, **dadurch gekennzeichnet, daß** das Monomer mit hoher Abbezahl folgender Formel genügt: 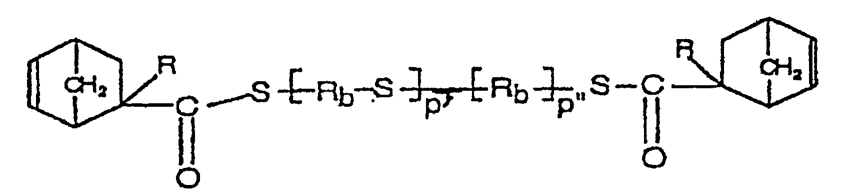 wobei R ein Wasserstoffatom oder ein Alkylradikal in C₁ - C₃, bevorzugt CH₃ und R_{b} eine Gruppe - (CH2)_{q} - ist, wobei q eine ganze Zahl von 1 bis 4, bevorzugt gleich 1 oder 2 ist, p' eine ganze Zahl von 1 bis 3 ist und p" eine ganze Zahl gleich 0 oder 1 ist.

8. Optische Linse nach Anspruch 7, **dadurch gekennzeichnet, daß** das Monomer mit hoher Abbezahl folgender Formel genügt:

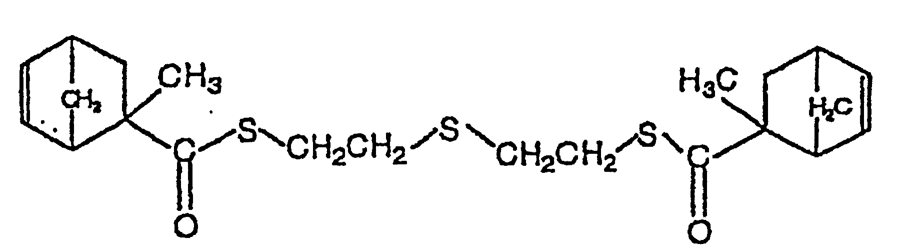

9. Optische Linse nach irgendeinem der Ansprüche 1 bis 8, **dadurch gekennzeichnet, daß** das Polythiolmonomer die Formel R₁ (SH) n¹ aufweist, wobei n¹ eine ganze Zahl und mindestens gleich 2 ist und R₁ ein aliphatisches, aromatisches oder heterozyklisches Radikal ist.

10. Optische Linse nach irgendeinem der Ansprüche 1 bis 9, **dadurch gekennzeichnet, daß** das Polythiolmonomer ein Dithiol, Trithiol oder ein Tetrathiol ist.

11. Optische Linse nach irgendeinem der Ansprüche 1 bis 10, **dadurch gekennzeichnet, daß** die Monomerzusammensetzung ein oder mehrere andere polymerisierbare zusätzliche Comonomere aufweist.

12. Optische Linse nach Anspruch 11, **dadurch gekennzeichnet, daß** ein oder mehr andere zusätzliche Comonomere aus difunktionellen Thiomethacrylatmonomeren ausgewählt werden.

13. Optische Linse nach irgendeinem der vorangehenden Ansprüche, **dadurch gekennzeichnet, daß** das Polythiol aus Bis(2-Mercaptoethyl)sulfid und Penthaerythrit-Tetrakis - Thioproprionat ausgewählt wird.

14. Linse nach irgendeinem der vorangehenden Ansprüche, **dadurch gekennzeichnet, dass** das Polythiol 10 bis 60% Gewichtsprozente, bevorzugt zwischen 20 und 50% Gewichtsprozente in Bezug auf das Gesamtgewicht der in der Zusammensetzung anwesenden polymerisierbaren Monomere aufweist.

15. Linse nach irgendeinem der vorangehenden Ansprüche, **dadurch gekennzeichnet daß** das Monomer mit hoher Abbezahl 10 bis 70% Gewichtsprozente, bevorzugt zwischen 20 und 50% Gewichtsprozente in Bezug auf das Gesamtgewicht der in der Zusammensetzung anwesenden Monomere aufweist.

16. Linse nach irgendeinem der vorangehenden Ansprüche, **dadurch gekennzeichnet daß** die anderen zusätzlichen Monomere, wenn sie vorliegen, 10 bis 50% Gewichtsprozente in Bezug auf das Gesamtgewicht der in der Zusammensetzung anwesenden Monomere aufweist.

17. Linse nach irgendeinem der vorangehenden Ansprüche, **dadurch gekennzeichnet daß** die Linse ein Brillenglas ist.

18. Linse nach Anspruch 4, **dadurch gekennzeichnet, daß** das Monomer mit hoher Abbezahl folgender Formel genügt: 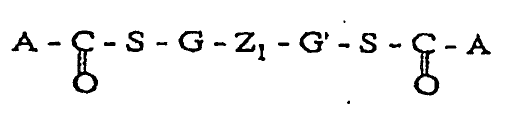 wobei A, G, G' und Z₁ so sind, wie sie in Anspruch 4 definiert sind .

19. Linse nach Anspruch 7, **dadurch gekennzeichnet, daß** das Monomer mit hoher Abbezahl folgender Formel genügt:
